(19) Europäisches Patentamt / European Patent Office / Office européen des brevets

(11) **EP 4 668 213 A1**

(12) **EUROPEAN PATENT APPLICATION**

(43) Date of publication:
**24.12.2025 Bulletin 2025/52**

(21) Application number: **25166982.6**

(22) Date of filing: **28.03.2025**

(51) International Patent Classification (IPC):
***G06T 7/80*** *(2017.01)*

(52) Cooperative Patent Classification (CPC):
**G06T 7/80;** G06T 2207/10004; G06T 2207/10016;
G06T 2207/30244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.06.2024 CH 6202024**

(71) Applicant: **Verity AG**
**8050 Zurich (CH)**

(72) Inventors:
• **BEFFA, Luciano**
  **8052 Zürich (CH)**
• **HEHN, Markus**
  **8038 Zürich (CH)**

(74) Representative: **P&TS SA (AG, Ltd.)**
**Avenue J.-J. Rousseau 4**
**P.O. Box 2848**
**2001 Neuchâtel (CH)**

Remarks:
Claim 16 to 48 are deemed to be abandoned due to
non-payment of the claims fee (Rule 45(3) EPC).

(54) **A METHOD FOR CALIBRATING A CAMERA AND METHODS FOR DETERMINING THE LOCATION OF A SUBJECT AND METHODS FOR TRACKING A SUBJECT**

(57)    According to the present invention there is provided a method for calibrating a camera (102) which is in a position and orientation within a predefined coordinate system, the method comprising the steps of, (a) moving an object along a trajectory within the predefined coordinate system and within a field of view of the camera; (b) determining the physical location of the object (104), over time, within the predefined coordinate system (101); (c) capturing one or more images of the object (104) using the camera (102) as the object (104) is moving along the trajectory (105); (d) recording the time instant at which each of the respective one or more images are captured; (e) processing each of the one or more images to determine the location of the object (104) in the each of the one or more images, to provide an respective image location for each of respective image; (f) for each of the one or more images, determining a respective expected image location of the object in that image, wherein the expected image location is determined using an initial predefined estimate of camera parameters and the physical location of the object 104 in the predefined coordinate system (101) at the time instant corresponding to the time instant said respective image was captured; (g) optimizing estimates of camera parameters of the camera (102) and/or optimizing an estimate of the position of the camera (102) and/or optimizing an estimate of the orientation of the camera (102), by minimizing reprojection errors for each of said one or more images, wherein the reprojection error of a respective image is the difference between the expected image location of the object (104) for that image and the image location of the object (104) in said image. There is further provided methods for determining and methods for estimating, a physical location of a subject located within a predefined coordinate system, and methods for tracking the position of a subject, each of which use at least one camera which have been calibrated using the aforementioned method for calibrating a camera.

Fig.1

EP 4 668 213 A1

## Description

### Field of the invention

The present invention concerns a method of calibrating a camera; in particular, a method of calibrating a camera, using a object, such as a mobile robot for example, whose position within a predefined coordinate system can be determined, and which involves optimizing estimates of camera parameters of the camera by minimizing reprojection errors of one or more images captured by the camera, wherein the reprojection error of a respective image is the difference between the expected image location of the object in that image and the actual image location of the object. The present invention further relates to methods for determining, or estimating, the location of a subject, which use one or more cameras which have been calibrated using the aforementioned method; and methods for tracking a subject using the aforementioned methods for determining, or estimating, the location of a subject.

### Background to the invention

Warehouses and other industrial facilities often have existing camera systems. These existing camera systems are used for limited purposes, such as for surveillance and monitoring purposes only. Disadvantageously, these existing camera systems cannot be used for more advanced purposes, such as for determining the position of subjects and/or for tracking the position of subjects, because they have not been calibrated in a way which would enable them to be used for more advanced purposes.

Furthermore, there is little motivation to use these existing camera systems for more advanced purposes because it would require manual calibration of these camera systems on a regular basis. Disadvantageously, regular manual calibration of the camera systems is inconvenient and expensive.

Systems, such as vision-based localization systems, for determining the position of subjects and/or for tracking the position of subjects are available (such systems are typically referred to as motion capture systems). Disadvantageously, these systems, such as vision-based localization systems are expensive. In warehouse applications and other industrial applications, these systems for determining the position of subjects and/or for tracking the positions of subjects would have to be provided in addition to camera systems which are used for surveillance and monitoring purposes. In other words, there are at least two separate systems, one system for determining the position of subjects and/or for tracking the positions of subjects, and a second system for surveillance and monitoring. Disadvantageously, having multiple systems will increase the probability of a system failure occurring, will require additional space, and multiple systems can be expensive to install and maintain.

An aim of the present invention is to mitigate or obviate at least some of the above-mentioned disadvantages associated with existing systems.

### Summary of the invention

According to the present invention there is provided a method, for calibrating a camera which is in a position and orientation within a predefined coordinate system, having the steps recited in claim 1.

Preferably the method of claim 1 for calibrating a camera which is in a position and orientation within a predefined coordinate system, is a computer implemented method. According to a further aspect of the present invention there is provided a computer program which when executed by a processor will cause the processor to carry out, or initiate the carrying out of, the steps of the method for calibrating a camera which is in a position and orientation within a predefined coordinate system. According to the further aspect of the present invention there is provided a computer-readable storage device, containing a set of instructions that causes a computer to carry out, or initiate the carrying out of, the steps of the method for calibrating a camera which is in a position and orientation within a predefined coordinate system.

Advantageously, the method of the present invention calibrates the camera so that the camera can be used for advanced purposes, such for determining (or estimating) the position of subjects and/or for accurately tracking the position of subjects. A camera calibrated by the method of the present disclosure may also enable the camera to be used for: operational insights; asset tracking; improved navigation of autonomous robots; redundant sensing (motion sensors, proximity sensors, occupancy sensors). Advantageously, the method of the present disclosure unlocks additional value from camera systems, such as low-cost camera systems, which would otherwise only be useful surveillance and monitoring purposes.

The method of the present invention uses a object to calibrate a camera which is in a position and orientation within a predefined coordinate system. The object may take any suitable form; in an embodiment the object is a mobile robot (such as an aerial vehicle (e.g. an autonomous aerial vehicle or drone). In an embodiment the object may be a mobile robot which is configured to perform one or more other primary functions besides its use in the calibration method. For example, the mobile robot may be an autonomous drone which is part of an inventory management system within a warehouse or other industrial setting, wherein the drone flies to monitor the level of inventory. In this case the autonomous drone is primarily used for inventory management, but conveniently may also be used to calibrate the camera using the method of the present disclosure. Moreover, the mobile robot may be automated and operable to move along the trajectory at predefined intervals (e.g. once per day, or once per month) so that the camera can be automatically regularly recalibrated.

It should be understood that in the present disclosure the object may take any suitable form. In an embodiment the object may be a non-automated object (which may, for example, be held by user and manually moved, or otherwise moved by another means), such as a box of goods or a crate of goods; in another embodiment the object may be an automated object (which may move automatically). In an embodiment the object is a robot such as a mobile robot; in the present disclosure a robot, or mobile robot, includes but is not limited to any device (preferably an automated device) that is operable to move. Examples of a mobile robot, include, but are not limited to, a vehicle (such as an aerial vehicle such as a drone for example; or a land-vehicle such a forklift or automobile for example); or a humanoid robot. In a preferred embodiment the mobile robot is an autonomous (i.e. an autonomous mobile robot). For example, in an embodiment the mobile robot is an autonomous aerial vehicle (such as an autonomous drone); in a preferred embodiment the mobile robot is an autonomous aerial vehicle, such as an autonomous drone, which is suitable for (and configured to) fly indoors (such as inside a warehouse).

In a preferred embodiment of the present invention the trajectory which the mobile robot is operated to move along is a predefined trajectory.

In an embodiment the camera is in a predefined position and orientation within a predefined coordinate system.

In another embodiment the camera may be in an unknown position and/or orientation within the predefined coordinate system; the position and orientation of the camera within the predefined coordinate system may also be unknown prior to calibration and be part of the optimization variable alongside the camera parameters. In other words, the position and/or orientation may be part of the optimization variable alongside the camera parameters.

According to a further aspect of the present invention there is provided a method for determining a physical location of a subject located within a predefined coordinate system, using a camera which is in a position and orientation within the predefined coordinate system and which has been calibrated using a method according to claim 1, the method comprising the steps of, operating the camera to capture at least one image of the subject; processing the at least one image using image segmentation to detect the pixels which depict the subject in the at least one image; select a location within the pixels which depict the subject; determine the physical location of the subject within the predefined coordinate system by determining where a light ray corresponding to the selected location intersects a predefined plane of the predefined coordinate system on which the subject is located.

A camera typically records information by gathering, typically with an image sensor, the light emitted or reflected from a scene, optionally passing through a set of optics between reflection/emission and hitting the image sensor. Light emitted or reflected from a point in 3D space (e.g. a point on a physical subject which is in the field of view of the camera) may at least partially travel along a projection line to be incident on the image sensor of a camera. The projection line is the line connecting at least said point in 3D space (e.g. a point on a physical subject which is in the field of view of the camera; said point in 3D space has 3D coordinates in a world coordinate system) and a 2D point on the image sensor (i.e. the 2D point on the image sensor has 2D coordinates on the image sensor i.e. 2D coordinates in the captured image) where said light ray is incident. Said point on the image sensor is a 2D point and may be referred to as a "location in the image". Preferably this phenomenon of image formation is described by a camera model (or projection function). The camera model is a function that maps 3D coordinates in space (e.g. a point on a physical subject) to 2D coordinates in a captured image. In such an embodiment, said camera model may be inverted and used to relate any 2D coordinates in the captured image to a 3D direction from where the light has been received from at said 2D point. Said 3D direction may therefore define/describe the direction of the projection line of its corresponding 2D coordinate in the image. Accordingly, in the present disclosure "the light ray/projection line corresponding to the selected location in an image" (that selected location having a 2D coordinate in the image) is defined as the line described by an origin (3D point) in the camera (preferably the camera center) and a direction vector corresponding to the selected location in the image, where the direction vector is defined as follows: any light that is received from the camera from said direction will arrive at the image sensor on said corresponding selected location in the image. In the present disclosure "the light ray/projection line corresponding to the selected pixel in an image" (that selected pixel having a 2D coordinate in the image) is defined as the line described by an origin (3D point) in the camera (preferably the camera center) and a direction vector corresponding to the selected pixel in the image, where the direction vector is defined as follows: any light that is received from the camera from said direction will arrive at the image sensor on said corresponding pixel in the image.

It should be noted that in the present disclosure the term light ray and projection line may be used interchangeably.

Preferably the method for determining a physical location of a subject located within a predefined coordinate system is a computer implemented method. According to a further aspect of the present invention there is provided a computer program which when executed by a processor will cause the processor to carry out, or initiate the carrying out of, the steps of the method for determining a physical location of a subject located within a predefined coordinate system. According to the further aspect of the present invention there is provided a computer-readable storage device, containing a set of instructions that causes a computer to carry out, or initiate the carrying out of, the steps of the method for determining a physical location of a subject located within a predefined coordinate system.

According to a further aspect of the present invention there is provided a method for tracking the position of a subject, comprising, carrying out the steps of the aforementioned method for determining a physical location of a subject at a first time to determine a first physical location of the subject at a first time instant; and carrying out the steps of the aforementioned method for determining a physical location of a subject at least a second time to determine a second physical location of the subject at a second time instant. Preferably the method for tracking the position of a subject is a computer implemented method.

According to a further aspect of the present invention there is provided a method for estimating a physical location of a subject located within a predefined coordinate system, using a first camera which is in a predefined position and orientation within the predefined coordinate system and which has been calibrated using a method according to claim 1, and a second camera which is in a predefined position and orientation within the predefined coordinate system and which has been calibrated using a method according to claim 1, the method comprising the steps of, operating the first camera to capture a first image; operating the second camera to capture a second image, wherein the field of view of the first camera and the field of view of the second camera, at least partially overlap; processing the first image using image segmentation to detect at least one subject in the first image; processing the second image using image segmentation to detect at least one subject in the second image; determining if the subject detected in the first image is the same as the subject detected in the second image by comparing one or more characteristics of the subject detected in the first image with one or more characteristics of the subject detected in the second image; if the subject detected in the first image is the same as the subject detected in the second image, then estimating the physical location of the subject in the predefined coordinate system by triangulation of a first location within pixels which depict the subject in the first image and a second location within pixels which depict the subject in the second image.

Preferably the method for estimating a physical location of a subject located within a predefined coordinate system is a computer implemented method. According to a further aspect of the present invention there is provided a computer program which when executed by a processor will cause the processor to carry out, or initiate the carrying out of, the steps of the method for estimating a physical location of a subject located within a predefined coordinate system. According to the further aspect of the present invention there is provided a computer-readable storage device, containing a set of instructions that causes a computer to carry out, or initiate the carrying out of, the steps of the method for estimating a physical location of a subject located within a predefined coordinate system.

According to a further aspect of the present invention there is provided a method for tracking the position of a subject, comprising, carrying out the steps of the aforementioned method for estimating a physical location of a subject at a first time to estimate a first physical location of the subject at a first time instant; and carrying out the steps of the aforementioned method for estimating a physical location of a subject at least a second time to estimate a second physical location of the subject at a second time instant. Preferably the method for tracking the physical location of a subject is a computer implemented method.

It should be understood that only the features/steps recited in the respective independent claims are essential to the respective inventions. It should be understood that any of the subsequently described features/steps are optional feature/step of any of embodiments described in the present disclosure. The dependent claims recite optional features/-steps of various embodiments of the invention. It should also be understood that even if a feature/step is described in the present disclosure as being a feature/step of an particular embodiment, it should be understood that that feature/step could be an optional feature/step of any of the other embodiments of the present disclosure. Any embodiment disclosed in the present disclosure may have any one or more of the feature/step of any of the other embodiments disclosed in the present disclosure.

**Brief description of the drawings**

Exemplary embodiments of the inventions are described with reference to the following drawings in which:

Figure 1 illustrates a camera which is being calibrated using a method for calibrating a camera according to an embodiment of the present invention;

Figure 2 illustrates a camera being used in a method, according to an embodiment of the present invention, to determine a physical location of a subject located within a predefined coordinate system;

Figure 3 illustrates a first camera and second camera being used in a method, according to an embodiment of the present invention, to estimate a physical location of a subject located within a predefined coordinate system.

**Detailed description of embodiments of the invention**

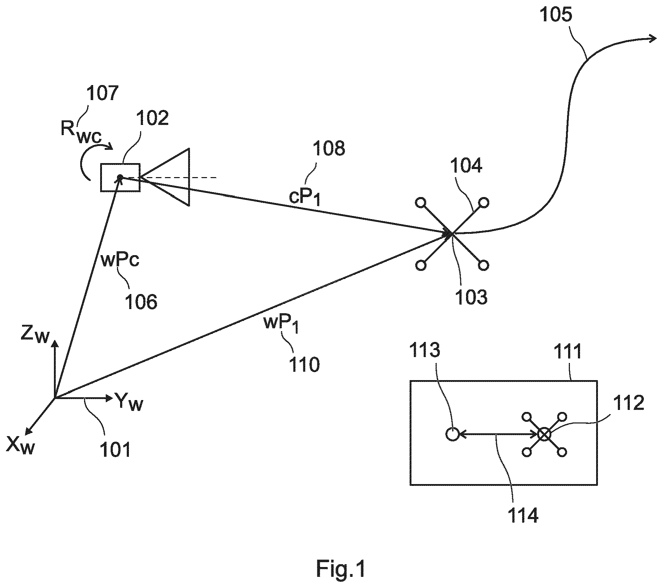

Figure 1 illustrates a camera 102 which is being calibrated using a method for calibrating a camera according to an embodiment of the present invention. Figure 1 shows an object 104, which in this exemplary embodiment is in the form of a mobile robot 104; the mobile robot 104 is following a trajectory 105. The camera 102 and the mobile robot 104 are located within a predefined coordinate system 101, which may be referred to in the present disclosure as the world coordinate system 101. In this example, the predefined coordinate system 101 is a three dimensional coordinate system having x,y and z axes which are each perpendicular to one another. It should be understood that the mobile robot 104 may be any device (preferably an automated device) that is operable to move. Examples of a mobile robot, include, but are not limited to, a vehicle (such as an aerial vehicle such as a drone for example; or a land-vehicle such a forklift or automobile for example), or a humanoid robot. In a preferred embodiment the mobile robot is an autonomous (i.e. an autonomous mobile robot). In the example illustrated in Figure 1 the mobile robot is an autonomous aerial vehicle 104 (such as an autonomous drone); preferably the autonomous aerial vehicle 104 is suitable for (and is configured to) fly indoors (such as inside a warehouse). Although the embodiment illustrated in the figures show the object 104 in the form of a mobile robot 104, it should be understood that in the present invention is not limited to requiring the object 104 to be a mobile robot 104; rather the object 104 may take any suitable form: in an embodiment the object 104 may be a non-automated object (such as a box of goods, or a crate of goods) which may, for example, be held by user or otherwise held (e.g. by a forklift), and manually moved along the trajectory 105. In another embodiment, such as the embodiment illustrated in Figure 1, the object may be any automated object (which may move automatically along the trajectory 105), such as the mobile robot 104. In other words the object may be a 'dumb' object which is not capable of self-propulsion and therefore must be actively moved along the trajectory 105, or, the object may be capable of self-propulsion and therefore operable to move along the trajectory 105.

According to an embodiment of the present invention there is provided a method for calibrating the camera 102 which is in a position and orientation within a predefined coordinate system, the method comprising the steps of,

(a) moving an object 104 along a trajectory 105 within the predefined coordinate system 101 and within a field of view of the camera 102;
(b) determining the physical location of the object 104, over time, within the predefined coordinate system 101;
(c) capturing one or more images of the object 104 using the camera 102 as the object 104 is moving along the trajectory 105; and
(d) recording the time instant at which each of the respective one or more images are captured;
(e) processing each of the one or more images to determine the location of the object 104 in the each of the one or more images, to provide a respective image location for the respective image;
(f) for each of the one or more images, determining a respective expected image location of the object in that image, wherein the expected image location is determined using an initial predefined estimate of camera parameters and the physical location of the object 104 in the predefined coordinate system 101 at the time instant corresponding to the time instant said respective image was captured;
(g) optimizing estimates of camera parameters of the camera 102 and/or optimizing an estimate of the position of the camera 102 and/or optimizing an estimate of the orientation of the camera 102, by minimizing reprojection errors for each of said one or more images, wherein the reprojection error of a respective image is the difference between the expected image location of the object 104 for that image and the image location of the object 104 in said image.

In the specific example illustrated in Figure 1 the object 104 is in the form of a mobile robot 104; and so the step (a) moving a object 104 along a trajectory 105 within the predefined coordinate system 101 and within a field of view of the camera 102, comprises the step of, operating the mobile robot 104 to move along a trajectory 105 within the predefined coordinate system 101 and within a field of view of the camera 102. It follows that steps (b) -(g) comprise:

(b) determining the physical location of the mobile robot 104, over time, within the predefined coordinate system 101;
(c) capturing one or more images of the mobile robot 104 using the camera 102 as the mobile robot 104 is moving along the trajectory 105; and
(d) recording the time instant at which each of the respective one or more images are captured;
(e) processing each of the one or more images to determine the location of the mobile robot 104 in the each of the one or more images, to provide a respective image location for the respective image;
(f) for each of the one or more images, determining a respective expected image location of the mobile robot in that image, wherein the expected image location is determined using an initial predefined estimate of camera parameters and the physical location of the mobile robot 104 in the predefined coordinate system 101 at the time instant corresponding to the time instant said respective image was captured;
(g) optimizing estimates of camera parameters of the camera 102 and/or optimizing an estimate of the position of the camera 102 and/or optimizing an estimate of the orientation of the camera 102, by minimizing reprojection errors for each of said one or more images, wherein the reprojection error of a respective image is the difference between the expected image location of the mobile robot 104 for that image and the image location of the mobile robot 104 in said image.

An objective of the method is to calibrate the camera 102 having unknown camera parameters, and /or having an unknown position within the predefined world coordinate system 101, and/or having an unknown orientation within the predefined world coordinate system 101. These camera parameters may, for example, include the intrinsics of the camera 102.

Estimates of camera parameters which are optimized in step (g) may comprise intrinsic camera parameters. The camera parameters may comprise one or more of: camera intrinsics, and/or a camera matrix, and/or a timing offset between a second clock which is used to record the time at which an image is captured by the camera and a first clock which is used to record the time at which the mobile robot occupies a physical location. The intrinsic camera parameters (i.e. camera intrinsics) may comprise internal parameters of the camera, including, for example the camera's focal length, image center coordinates, skew factor, distortion model (such as distortion parameters of the lens describing deviations in projection behavior between the lens of the camera and an ideal pinhole projection model), and/or corresponding parameters. The camera intrinsics may be provided in the form of a camera intrinsic matrix.

Intrinsic camera parameters may be understood to be parameters describing the image formation of the camera, i.e. the way a scene is projected onto an image plane and recorded by the underlying image sensor to produce an image. Said parameters may include the focal length (parametrized in the two dimensions of the image sensor), the principal point or camera center (parametrized in the two dimensions of the image sensor), the image sensor skew parameter describing the deviation of the pixel rows and columns from being perpendicular and/or the deviation from perpendicularity between the lens and the image sensor, and the distortion parameters of the lens describing deviations in projection behavior between the lens of the camera and an ideal pinhole projection model. In some embodiments one or more of the aforementioned parameters may be summarized and represented in a camera matrix.

In the example illustrated in Figure 1, the mobile robot 104 is operated move along a trajectory 105 within the predefined coordinate system 101 and within a field of view of the camera 102 (step (a)). In a preferred embodiment the trajectory 105 that the mobile robot 104 is operated to move along is a predefined trajectory.

At a first time-instance $t_1$ the mobile robot 104 is located at a first position 103. The position of the mobile robot expressed in the predefined coordinate system 101 at any time, is known or can be determined. The present embodiment involves step (b) of determining the physical location of the mobile robot 104, within the predefined coordinate system 101, over time; specifically at time first time-instance $t_1$.

In an embodiment the trajectory 105 comprises one or more positions in the predefined coordinate system 101 for the mobile robot 104 to move to, and one or more velocities at which the mobile robot 104 should move; and the step (b) of determining the physical location of the mobile robot 104, over time, comprises, using a first clock, and a known start time at which the mobile robot 104 begins the trajectory 105, and the trajectory 105, to determine the physical location of the mobile robot 104 in the predefined coordinate system 104 at any time instant during the time period that the robot is moving along the trajectory 105. Preferably the trajectory 105 comprises a series of physical locations in the predefined coordinate system 101 for the mobile robot 104 to move to, and one or more velocities at which the mobile robot 104 should move at each physical location in the series. In the present disclosure a known start time may be a predefined start time.

In an embodiment the step (b) of determining the physical location of the mobile robot 104, over time, comprises, using a first clock and a position determining means to determine the physical location of the mobile robot 104 within the predefined coordinate system 101, at any time instant. Preferably the step (b) of determining the physical location of the mobile robot 104, over time, comprises, using the first clock and a position determining means to determine the physical location of the mobile robot 104 at any time instant during the time period that the mobile robot 104 is moving along the trajectory 105. For example, during use the position determining means may determine the physical location of the mobile robot 104 within the predefined coordinate system 101, preferably at predefined intervals. Preferably, the position determining means determines the physical location of the mobile robot 104 within the predefined coordinate system 101 as the mobile robot 104 is moving along the trajectory 105. The time at which each respective physical location is determined by the position determining means may be recorded by the first clock. This creates a history of the past physical locations occupied by the mobile robot 104 (preferably the past physical locations occupied by the mobile robot 104 as the mobile robot moved along the trajectory 105) and the time at which the mobile robot 104 occupied each respective physical location.

It should be understood that determining said respective physical location by the position determining means can be carried out by any suitable position determining means. For example, the position determining means may be any of (or a combination of), but not limited to, GPS/GNSS, local radio-frequency-based positioning (e.g. Wi-Fi or UWB; using time-difference-of-arrival (TDoA) or time-of-arrival (ToA) / time-of-flight (ToF) measurements; Wi-Fi fingerprinting), vision-based localization (e.g. SLAM or visual-inertial odometry, fiducials, motion-capture systems). In embodiments where the object 104 is a mobile robot, the mobile robot preferably is equipped with an appropriate position determining means which may primarily be used for operating the mobile robot, but is advantageously used to determine the physical location of the object 104 in accordance with the present invention.

At the first time-instance $t_1$ the camera 102 captures an image 111 of the scene as the mobile robot 104 is moving along the trajectory 105 (steps (c) and (d)).

In an embodiment a second clock is used to record the time at which the/each image is captured by the camera 102. In a preferred embodiment the first clock and second clock are synchronized to have the same time, or, to have a fixed known time difference. In the present disclosure the known time difference may be a predefined time difference. In an embodiment the method further comprises the step of slowing the velocity at which the mobile robot 104 moves along the trajectory 105 if there is a difference between the time on the first clock and the time on the second clock. The first clock and second clock may be different clocks, or, the first clock and second clock may be same clock so that only one single clock is shared between the camera 102 and the position determining means.

The image 111 captured by the camera 102 includes a depiction of the mobile robot 104. The captured image is processed to determine the location of the mobile robot 104 in the image, to provide an image location for the captured image (step (e)). The captured image may be processed using any suitable means. In the example illustrated in Figure 1, the captured image is processed by carrying out image segmentation to first identify the pixels that depict the mobile robot 104 in the captured image; then, a location 112 within the identified pixels is selected. The selected location 112 defines the location of the mobile robot 104 within the image, and thus defines the image location. It should be understood that any suitable location within the identified pixels can be selected, for example a position at the centroid of the identified pixels can be selected.

Next for the captured image an expected image location of the mobile robot 103 in the captured image is determined using an initial predefined estimate of camera parameters and the physical location of the mobile robot 104 in the predefined coordinate system 101 at the first time-instance $t_1$ (i.e. the time instant corresponding to the time instant said image was captured by the camera 102) (step (f)). This can be done by computing the expected position of the mobile robot 108 expressed in a coordinate system attached to the camera according to the following equation:

$$_c\hat{p}_1 = R_{WC}^{\mathrm{T}}(_wp_1 - _wp_c) \qquad (1)$$

Wherein $R_{WC}$ is a rotation matrix describing the orientation of the camera 107. More specifically, the rotation matrix describes a transformation from a coordinate system fixed to the camera to the world coordinate system 101. Further, $_wp_1$ is the position of the mobile robot 110 expressed in the world coordinate frame, $_wp_C$ is the position of the camera 106 expressed in the world coordinate frame. And projecting said expected position to the image coordinates $u,v$ according to the following equation:

$$\begin{bmatrix} u \\ v \end{bmatrix} = \begin{bmatrix} f_x & \alpha & c_x \\ 0 & f_y & c_y \end{bmatrix} \begin{bmatrix} _c\hat{p}_{1,x} \\ _c\hat{p}_{1,y} \\ 1 \end{bmatrix} \frac{1}{_c\hat{p}_{1,z}}$$

$$(2)$$

Wherein $f_x$ and $f_y$ are the focal lengths in x and y-direction of the image sensor, respectively, $c_x$ and $c_y$ are the principal point coordinates (i.e. the x and y coordinate of the image center, and $\alpha$ an image sensor skewness parameter, $_c\hat{p}_{1,x}, _c\hat{p}_{1,y}, _c\hat{p}_{1,z}$ are the x, y, and z components of the expected position of the mobile robot 108 $_c\hat{p}_1$, respectively.

Notably, the projection equation is an example projection equation for a pinhole camera with focal lengths $f_x$ and $f_y$, principal point coordinates $c_x$ and $c_y$, and skewness parameter $\alpha$.

Note that the method disclosed herein is not limited to the projection equation being the pinhole camera model. That is, the projection equation isn't limited to the pinhole camera model. In some embodiments other, more appropriate camera and/or projection models are used. Examples include the equidistant fisheye model (which may be an appropriate choice if camera 102 was equipped with a fisheye lens) or the omnidirectional camera model (which may be an appropriate choice if camera 102 was a catadioptric camera system). In some embodiments, any of the aforementioned camera models may additionally comprise lens distortion terms and corresponding distortion parameters.

In an embodiment the camera 102 has a predefined position and orientation within the predefined coordinate system 101; and wherein the step of determining a respective expected image location of the mobile robot 104 in the captured image comprises using the initial predefined estimate of camera parameters, and the predefined position and orientation of the camera 102, to transform the physical location of the mobile robot 104 in the predefined coordinate system 101 at the first time-instance $t_1$ (i.e. the time instant corresponding to the time instant said image was captured by the camera 102), to a position in a coordinate system of the camera, wherein the position in the coordinate system of the camera 102 defines the expected image location of the mobile robot in the captured image.

In another embodiment the method comprises a step of estimating the position and orientation of the camera 102 within the predefined coordinate system 101 to provide an estimated position and orientation of the camera; and the step of determining a expected image location of the mobile robot 104 in the captured image comprises using the initial predefined estimate of camera parameters, and the estimated position and orientation of the camera 102, to transform the physical location of the mobile robot 104 in the predefined coordinate system 101 at the first time-instance $t_1$ (i.e. the time instant corresponding to the time instant said image was captured by the camera 102), to a position in a coordinate system of the camera 102, wherein the position in the coordinate system of the camera 102 defines the expected image location of the mobile robot 104 in the captured image. It should be understood that an estimate of a position and orientation of the camera within the predefined coordinate system may be determined using any suitable techniques known in the art. For example, sampling different perspective positions and orientations and solving the optimization multiple times and see if a solution can be found. Said sampling can also be 'smart', by either sampling around a user-provided guess of the position and orientation of the camera within the predefined coordinate system, or by sampling around an estimate of the position and orientation of the camera within the predefined coordinate system which is based on an assumption about the visibility of the mobile robot (for example, if the robot is visible in the image, then the camera is likely within a certain distance from it and facing roughly in the direction of the mobile robot). The present invention is not limited to any particular manner of determining an estimate of a position and orientation of the camera within the predefined coordinate system; any suitable techniques known in the art can be used.

Figure 1 illustrates the location 112 of the mobile robot 104 within the captured image, and the expected image location 113 of the mobile robot 104 in the captured image; as can be seen in Figure 1 there is a reprojection error 114 between the location 112 and the expected location 113, wherein the reprojection error is the difference between the expected image location 113 of the mobile robot 104 and the image location 112 of the mobile robot 104. This reprojection error 114 indicates that the predefined estimate of camera parameters do not accurately represent the true values of the camera parameters.

Finally, estimates of the camera parameters of the camera 102 are optimized, and/or an estimate of the position of the camera 102 is optimized, and/or an estimate of the orientation of the camera 102 is optimized, by minimizing reprojection error (step (g)). In an embodiment the step (g) of optimizing estimates of camera parameters of the camera 102 by minimizing reprojection errors may comprise, adjusting the camera parameters of the camera 102 and/or adjusting the position of the camera 102 within the predefined coordinate system 101 and/or adjusting the orientation of the camera 102, to decrease the difference (i.e. the reprojection error 114) between the expected image location 113 of the mobile robot and the image location 112 of the mobile robot 104.

In this embodiment the method comprises updating the predefined estimate of camera parameters to camera parameters $\theta^*$ that minimizes said reprojection error by solving the following optimization problem (3):

$$\theta^* = \arg\min_\theta C(r) \quad (3)$$

wherein C is a cost function that increases with increasing reprojection error r, and $\theta$ is the set of estimates of camera parameters that are to be optimized. A suitable cost function C may be the sum of squared 2-norms of all reprojection errors.

The reprojection error r is a function of the camera parameters $\theta$ since changing said camera parameters will change the expected location of the robot in the image. For example, if an estimate of the orientation of the camera $R_{WC}$ is to be optimized, changing said orientation in equation (1) will influence the expected position of the robot in the camera coordinate system, thereby changing the expected position of the robot in the image through equation (2), ultimately changing the reprojection error.

The optimization problem can be solved by any suitable known means, for example Newton's Method, Gradient descent, Simulated annealing, BFGS. In other words, step (g) may comprise carrying out Newton's Method, Gradient descent, Simulated annealing, BFGS

It should be understood that the mobile robot 104 may take any suitable form; the mobile robot 104 is preferably an autonomous robot. In the example illustrated in Figure 1 the mobile robot 104 is an autonomous aerial vehicle 104. More specifically, the mobile robot 104 is an autonomous aerial vehicle 104 which is part of an inventory management system, wherein the autonomous aerial vehicle 104 is configured to monitor the level of inventory within a predefined space. In other words, the autonomous aerial vehicle 104 has a primary function to monitor the level of inventory within a predefined space; however it has a secondary function in that it can be used in the method to calibrate the camera 104, thereby unlocking additional value from the autonomous aerial vehicle 104.

In an embodiment of the present invention the trajectory 105 is defined by a trajectory which the mobile robot follows when carrying out a predefined task. That predefined task may comprise at least one of, carrying out inventory management, and/or carrying out one or more tasks related to an inspection, and/or carrying out an inspection of a subject; and/or moving items and/or delivering items.

In a preferred embodiment the trajectory 105 that the mobile robot 104 is operated to move along is a predefined trajectory. The predefined trajectory is a trajectory that passed through the field of view of the camera 102.

The example illustrated in Figure 1 comprises capturing a single image with the camera 102. Note that only at most two degrees of freedom of the camera parameter space are observable from a single image. For example, from a single image, estimates of pitch and roll of the camera may be optimized, but the remaining camera parameters must be known, or a reasonably accurate estimate thereof must be available. To a person skilled in the art, it is straightforward to extend the illustrated method to additionally capture one or more images as the mobile robot is moving along the trajectory 105 and thereby collecting one or more observations of the robot with corresponding expected locations of the robot in the image, extend the optimization problem (3) to jointly minimize the resulting two or more reprojection errors (or a cost function based thereon) to determine the calibration of the camera.

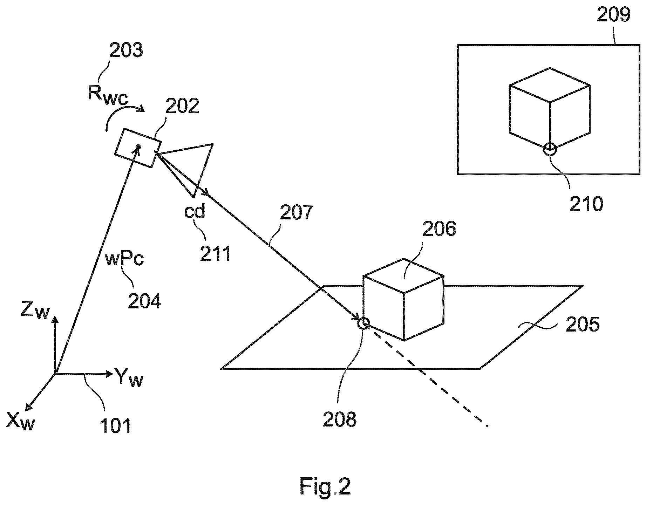

Figure 2 illustrates a camera 202 being used in a method, according to an embodiment of the present invention, to determine a physical location of a subject 206 located within a predefined coordinate system 201. The subject is located on (i.e. rests on) a predefined plane 205 within the predefined coordinate system 201. The camera 202 has a predefined position and orientation within the predefined coordinate system 201, and, importantly, the camera 202 has been calibrated using the method for calibrating the camera described above with respect to Figure 1.

In the example illustrated in Figure 2, the predefined coordinate system 201 is a three dimensional coordinate system 201 having an x, y and z axis which are each perpendicular to one another, and the predefined plane 205 of the predefined coordinate system 206 on which the subject is located is the x-y plane of the predefined coordinate system 206, and the subject 206 is located at a zero coordinate on the z-axis.

The method for determining a physical location of a subject 206 located within a predefined coordinate system 201 comprises the steps of,

(a1) operating the camera 202 to capture an image 209 of the subject 206;
(b1) processing the captured image using image segmentation to detect pixels which depict the subject 206 in the captured image;
(c1) selecting a location within the pixels which depict the subject 206 in the captured image;
(d1) determining a physical location of the subject 206 within the predefined coordinate system 201 by determining where a light ray corresponding to the selected location intersects a predefined plane 205 of the predefined coordinate system 201 on which the subject 206 is located, wherein the location where the light ray intersects the predefined plane 205 corresponds to the physical location of the subject 202 within the predefined coordinate system 201.

The light ray corresponding to the selected location in an image is defined as a projection line described by an origin (3D point) in the camera (preferably the camera center) and a direction vector corresponding to the selected location in the image, where the direction vector is defined as follows: any light that is received from the camera from said direction will arrive at the image sensor on said corresponding selected location in the image.

The step (c1) of selecting a location 210 within the pixels which depict the subject 206 in the captured image, comprises selecting any suitable location within the pixels which depict the subject 206. In the present example the selected location 210 within the pixels which depict the subject 206 is the lowest point within the pixels which depict the subject 206 in the captured image.

In an embodiment the step (c1) of selecting a location 210 within the pixels which depict the subject 206 may comprise selecting a location 210 within the pixels which depict the subject 206 which is located at the centroid of the pixels which depict the subject 206.

In an embodiment the step (c1) of selecting a location 210 within the pixels which depict the subject 206 may comprise selecting a location 210 which is below or on the lowest pixel, or, selecting a location which is closest to a surface (such as ground surface) depicted in the image on top of which the subject 206 rests.

In an embodiment the step (c1) of selecting a location 210 within the pixels which depict the subject 206 may comprise, selecting a pixel from the pixels which depict the subject 206. In another embodiment the step of selecting a location 210 within the pixels which depict the subject 206 may comprise, selecting a point which is not necessarily a pixel, such as, for example, a centroid of the pixels which depict the subject. A selected pixel has integer image coordinates, whereas a selected point in the image (wherein that selected point is not necessarily a pixel) does not necessarily have to have integer image coordinates but rather the selected location/point can have real-valued image coordinates.

In an embodiment the step of determining where the light ray corresponding to the selected location intersects the predefined plane 205 of the predefined coordinate system 201 on which the subject 206 is located/rests, comprises determining two dimensional image coordinates of the selected location 210 in the image; converting the determined two dimensional image coordinates into a three dimensional vector which represents the light ray corresponding to the selected location 210; using the predefined position and orientation of the camera 202 within the predefined coordinate system 201 to determine wherein the three dimensional vector intersects the predefined plane 205 of the predefined coordinate system 205; wherein the location where the three dimensional vector intersects the predefined plane 205 of the predefined coordinate system 201 corresponds to the location where the light ray corresponding to the selected location 210 intersects the predefined plane 205 of the predefined coordinate system, and corresponds to the physical location of a subject 206 located within a predefined coordinate system 201.

In an embodiment step (d1) comprises first determining a unit vector $_cd$ which points from the camera 202 to the subject 206 by converting the 2D coordinates of the selected location 210 in the image to a 3D direction $_cd$ 211 according to the following equation (4):

$$\text{solve} \begin{cases} \frac{u-c_x}{f_x} = \frac{x}{z} \\ \frac{v-c_y}{f_y} = \frac{y}{z} \\ z = \sqrt{1 - x^2 - y^2} \end{cases} \text{ for } {}_Cd = \begin{bmatrix} x \\ y \\ z \end{bmatrix} \qquad (4)$$

wherein $f_x$, $f_y$ are focal length parameters, and $c_x$ and $c_y$ the principal point coordinates, and u,v are the coordinates of the selected location 210.

In an embodiment the step (d1) comprises determining where the light ray 207 corresponding to the selected location intersects (in an intersection point 208) the predefined plane 205 of the predefined coordinate system 201 on which the subject 206 is located/rests, by solving the following equation (5) for $x$, $y$ and $\lambda$:

$$_wp_c + R_{WC} \cdot {}_Cd \cdot \lambda = \begin{bmatrix} x \\ y \\ z_p \end{bmatrix} \qquad (5)$$

wherein x and y are the two first coordinates of the physical location 208 of the subject 206 within the predefined coordinate system 201, $z_p$ is the known altitude of plane 205 in the predefined coordinate system 201, $R_{WC}$ 203 is a rotation matrix describing the orientation of the camera 202. More specifically, the rotation matrix describes a transformation from a coordinate system fixed to the camera to the world coordinate system 201. Further, $_wp_C$ 204 is the position of the camera expressed in the world coordinate frame.

Referring to the example illustrated in Figure 2, step (d1) comprises first determining a unit vector $_cd$ 211 which points from the camera 202 to the subject 206 by converting the 2D coordinates of the selected location 210 in the image to a 3D direction according to the equation (4):

$$\text{solve} \begin{cases} \frac{u-c_x}{f_x} = \frac{x}{z} \\ \frac{v-c_y}{f_y} = \frac{y}{z} \\ z = \sqrt{1 - x^2 - y^2} \end{cases} \text{ for } {}_Cd = \begin{bmatrix} x \\ y \\ z \end{bmatrix} \qquad (4)$$

wherein $f_x$, $f_y$ are focal length parameters, and $c_x$ and $c_y$ the principal point coordinates, and u,v are the coordinates of the selected location 210.

Then the physical location 208 of the subject 206 within the predefined coordinate system 201 is determined by intersecting a projection line which passes through camera center and points along the unit vector $_cd$ 211, with the plane 205, by solving the following equation (5) for $x$, $y$ and $\lambda$:

$$_wp_c + R_{WC} \cdot {}_Cd \cdot \lambda = \begin{bmatrix} x \\ y \\ z_p \end{bmatrix} \qquad (5)$$

wherein x and y are the two first coordinates of the physical location 208 of the subject 206 within the predefined coordinate

system 201, $z_p$ is the known altitude of plane 205 in the predefined coordinate system 201, $R_{WC}$ 203 is a rotation matrix describing the orientation of the camera 202. More specifically, the rotation matrix describes a transformation from a coordinate system fixed to the camera to the world coordinate system 201. Further, $_wp_C$ 204 is the position of the camera expressed in the world coordinate frame.

In the example illustrated in Figure 2 the x-y plane of the predefined coordinate system 206 is located at a surface of the ground and a zero coordinate on the z-axis located at the surface of the ground, so that the step of determining where the light ray corresponding to the selected location intersects a predefined plane 205 of the predefined coordinate system on which the subject 206 is located, comprises determining where the light ray corresponding to the selected location intersects the plane 205 and said plane coincides with the ground.

In an embodiment the step (c1) of selecting a location 210 within the pixels which depict the subject 206 may comprise, selecting a pixel from the pixels which depict the subject 206. If the x-y plane of the coordinate system is located at the surface of the ground and a zero coordinate on the z-axis is at the surface of the ground, the step of determining where the light ray corresponding to the selected pixel intersects a predefined plane of the predefined coordinate system on which the subject is located, may comprise determining where the light ray corresponding to the selected pixel intersects the ground.

In an embodiment the selected location 210, within the pixels which depict the subject 206, corresponds to the location of a pixel. In other words, the step (c1) of selecting a location 210 within the pixels which depict the subject 206 may comprise, selecting a location which corresponds to the location of a pixel (e.g. corresponds to the location of a center of a pixel). Selecting a location 210, within the pixels which depict the subject 206, that corresponds to the location of a pixel, may be equivalent to selecting a pixel from the pixels which depict the subject 206. In such embodiments any subsequent steps are performed analogously as said selected pixel can equivalently be treated as a selected location 210.

In an embodiment the step of selecting a pixel from the pixels which depict the subject comprises selecting a pixel which is located at an end extremity of the pixels which depict the subject. In an embodiment the step of selecting a pixel from the pixels which depict the subject comprises selecting a pixel which is located at the centroid of the pixels which depict the subject. In an embodiment the step of selecting a pixel from the pixels which depict the subject comprises selecting the lowest pixel, or, selecting the pixel which is closest to a surface depicted in the image on top of which the subject rests.

According to a further aspect of the present invention there is provided a method for tracking the position of a subject 206, comprising, carrying out any embodiment of the above-mentioned method (steps (a1)-(d1)) of determining a physical location of the subject 206, at a first time to determine a first physical location of the subject at a first time instant; and carrying out any embodiment of the above-mentioned method (steps (a1)-(d1)) of determining a physical location of the subject 206, at at least a second time to determine at least a second physical location of the subject at a second time instant. Accordingly, the physical locations of the subject 206 at at least two time instances are determined, thereby tracking the position of the subject 206 over time.

In a preferred embodiment the method for tracking the position of a subject 206, comprises, carrying out any embodiment of the above-mentioned method (steps (a1)-(d1)) of determining a physical location of the subject 206 a plurality of times to determine a respective plurality of physical locations of the subject at respective plurality of time instants.

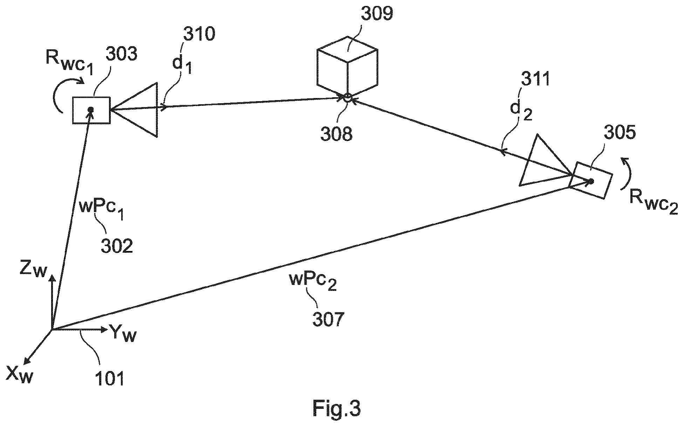

Figure 3 illustrates a first camera 303 and second camera 305 being used in a method, according to an embodiment of the present invention, to estimate a physical location 308 of a subject 309 located within a predefined coordinate system 301.

The first camera 303 and second camera 305 each have respective predefined positions and orientations within the predefined coordinate system 301, and, importantly, the first camera 303 and second camera 305 have each been calibrated using the method for calibrating the camera described above with respect to Figure 1. In the example illustrated in Figure 3, the predefined coordinate system 301 is a three-dimensional coordinate system 301 having an x, y and z axis which are each perpendicular to one another.

The method for estimating a physical location 308 of the subject 309 located within a predefined coordinate system 301, using the first camera 303 which is in a predefined position and orientation within the predefined coordinate system 301 and the second camera 305 which is in a predefined position and orientation within the predefined coordinate system 301, comprises the steps of,

(a2) operating the first camera 303 to capture a first image;
(b2) operating the second camera 305 to capture a second image, wherein the field of view of the first camera 303 and the field of view of the second camera 305, at least partially overlap ;
(c2) processing the first image using image segmentation to detect at least one subject 309 depicted in the first image;
(d2) processing the second image using image segmentation to detect the depiction of at least one subject 309 depicted in the second image;
(e2) determining if the subject 309 detected in the first image is the same as the subject 309 detected in the second image by comparing one or more characteristics of the subject 309 detected in the first image with one or more characteristics of the subject 309 detected in the second image;

(f2) if the subject 309 detected in the first image is the same as the subject 309 detected in the second image, then estimating the physical location of the subject 309 in the predefined coordinate system 301 by triangulation of a location within pixels which depict the subject 309 in the first image and a location within pixels which depict the subject 309 in the second image.

Preferably the time duration between performing step (a2) and performing step (b2) is less than 1 second. In other words, the time between capturing the first image and capturing the second image is less than 1 second. In another embodiment the time between operating the first camera 303 to capture the first image and operating the second camera 305 to capture the second image is less than 0.1 seconds. In another embodiment the time between operating the first camera 303 to capture the first image and operating the second camera 305 to capture the second image is less than 10 milliseconds. If the subject 309 is moving, and there is a time difference between when the first and second images are captured, then that time difference may result in inaccuracies in the estimation of the physical location of the subject 309; if the time difference is small then these slight inaccuracies will be small and thus within a predefined acceptable accuracy threshold (in other words the physical location of the subject 309 can still be estimated with an acceptable level of accuracy); however if the time difference is large then this may result in large inaccuracies leading to an estimate with an inaccuracy which is greater than the predefined acceptable accuracy threshold (in other words the physical location of the subject 309 will not be estimated with an acceptable level of accuracy). For example, if the subject 309 is moving at a speed of 10m/s (e.g. the speed at which a forklift may typically move) and a required accuracy of 10cm, the time difference can at most be 100 milliseconds. Therefore, it is desirable to have a short time difference between operating the first camera 303 to capture the first image and operating the second camera 305 to capture the second image, although it is not essential to the invention that the time difference be short. If the subject 309 is moving slowly then a time difference of 1 second or less between when the first and second images are captured may be acceptable; if the subject is moving fast then a time difference of 0.1 seconds or less between when the first and second images are captured may be acceptable. If the subject 309 is moving fast then a time difference of 10 milliseconds or less between when the first and second images are captured may be acceptable and will facilitate the position of the subject 309 to be estimated with high accuracy. In an embodiment the time between operating the first camera 303 to capture the first image and operating the second camera 305 to capture the second image, is zero or substantially zero; in other words the first camera 303 captures the first image at the same time the second camera 305 captures the second image.

It should be understood that in the step (c2) of processing the first image using image segmentation to detect at least one subject 309 depicted in the first image, any suitable means of image segmentation can be used. Likewise, it should be understood that in the step (d2) of processing the second image using image segmentation to detect at least one subject 309 depicted in the first image, any suitable means of image segmentation can be used.

It should be understood that in step (e2) the subject 309 detected in the first image is the same as the subject 309 detected in the second image if the depictions in the first and second images are depictions of the same physical subject 309. In other words, the subject 309 may appear differently in the first and second images. For example, the subject may be a person, and that person may be depicted as being in a first pose in the first image, and that same person may be depicted as being in a second different pose in the second image. Although the depictions of the person in the first and second images differ the subject is still considered to be same subject because it is the same person depicted in both images.

In step (e2) preferably said characteristics that are compared comprise one or more of: descriptors describing the subject 309, color of the subject 309, size of the subject 309, shape of the subject 309, and/or a segmentation label. A segmentation label may be equivalent to the term "characteristics". A segmentation label describes a defining characteristic (or a characteristic of interest) for each pixel in a given image - e.g. it would indicate whether a certain pixel belongs to the projection of a human. A collection of pixels with the same segmentation label (e.g. a segmentation label "Human") would then describe the full projection of the subject. Advanced image segmentation can provide more advanced contextual information than just color, shape, etc. For example, in object detection the segmentation label might be a label "Human" or "Car".

Most preferably the detected at least one subject 309 in the first image has associated with it a first descriptor describing said subject 309 depicted in the first image; and the detected at least one subject 309 in the second image has associated with it a second descriptor describing said subject 309 depicted in the second image; and step (e2) comprises comparing the first and second descriptors to determine if the subject 309 detected in the first image is the same as the subject 309 detected in the second image. For example, if the first descriptor and second descriptor are the same (or substantially similar, as measured, for example, by a similarity metric or a distance metric expressed in the feature space of the descriptor) then it can be determined that the subject 309 detected in the first image is the same as the subject 309 detected in the second image.

In an embodiment the step (f2) of estimating the physical location of the subject 309 in the predefined coordinate system 301 by triangulation of the pixel coordinates of the subject 309 from each of the first and second images, comprises,

selecting a first location within the pixels which depict the subject 309 in the first image; selecting a second location within the pixels which depict the subject 309 in the second image; estimating the location of a point in the predefined coordinate system 301 which is the least distance from both a light ray corresponding to the selected first location in the first image and a light ray corresponding to the selected second location in the second image, wherein the location of the point corresponds to the estimation of the location of the subject 309 in the predefined coordinate system 301. The light ray/projection line corresponding to the selected location in an image (that selected location having a 2D coordinate in the image) is defined as the line described by an origin (3D point) in the camera (preferably the camera center) and a direction vector corresponding to the selected location in the image, where the direction vector is defined as follows: any light that is received from the camera from said direction will arrive at the image sensor on said corresponding selected location in the image.

In an embodiment the step of selecting a first location within the pixels which depict the subject 309 in the first image comprises selecting a first location wherein said first location corresponds to the location of a first pixel which is among the pixels which depict the subject 309 in the first image; and the step of selecting a second location within the pixels which depict the subject 309 in the second image, comprises selecting a second location wherein the second location corresponds to the location of a second pixel which is among the pixels which depict the subject 309 in the second image. In other words, the selected first location in the first image may correspond to the location of a first pixel that is within the pixels that depict the subject 309 in the first image, and the selected second location in the second image may correspond to the location of a second pixel that is within the pixels that depict the subject 309 in the second image.

In an embodiment the step of estimating the location of the point in the predefined coordinate system 301 which is the least distance from both a light ray corresponding to the selected first location in the first image and a light ray corresponding to the selected second location in the second image, comprises carrying out a midpoint method or modified Euler method. Preferably the step of estimating the location of the point comprises, estimating the location of a single point in the predefined coordinate system which is the least distance from both a light ray corresponding to the selected first location in the first image and a light ray corresponding to the selected second location in the second image, wherein the location of the single point corresponds to the estimation of the location of the subject in the predefined coordinate system.

In the preferred embodiment the step (f2) of estimating the location of the point in the predefined coordinate system 301 which is the least distance from both the light ray corresponding to the selected first location in the first image and the light ray corresponding to the selected second location in the second image, comprises, determining two dimensional image coordinates of the selected first location in the first image; converting the determined two dimensional image coordinates into a first three dimensional vector which represents the light ray corresponding to the selected first location in the first image; determining two dimensional image coordinates of the selected second location in the second image; converting the determined two dimensional image coordinates into a second three dimensional vector which represents the light ray corresponding to the selected second location in the second image; using the predefined positions and orientations of the respective first and second cameras 303, 305 within the predefined coordinate system 301 to determine the location of the point in the predefined coordinate system 301 which is the least distance from both the light ray corresponding to the selected first location in the first image and the light ray corresponding to the selected second location in the second image.

In yet a further embodiment, the step of estimating the physical location of the subject 309 in the predefined coordinate system by triangulation of a location within pixels which depict the subject 309 in the first image and a location within pixels which depict the subject 309 in the second image, comprises, selecting a first location within the pixels which depict the subject 309 in the first image; selecting a second location within the pixels which depict the subject 309 in the second image; and determining the location of a point (preferably a single point) in the predefined coordinate system 301 where both a light ray corresponding to the selected first location in the first image and a light ray corresponding to the selected second location in the second image, intersect, wherein the location of the point (preferably the single point) corresponds to the estimation of the location of the subject 309 in the predefined coordinate system 301.

In a preferred embodiment step (f2) comprises, (i) for the selected first location, determining a first unit vector $d_1$ 310 which points from the first camera 303 to the subject 309 by converting the 2D coordinates of the selected first location in the first image to a 3D direction according to the following equation (6):

$$\text{solve} \begin{cases} \frac{u-c_x}{f_x} = \frac{x}{z} \\ \frac{v-c_y}{f_y} = \frac{y}{z} \\ z = \sqrt{1-x^2-y^2} \end{cases} \text{for } {}_C d = \begin{bmatrix} x \\ y \\ z \end{bmatrix} \quad (6)$$

wherein $f_x$, $f_y$ are focal length parameters, and $c_x$ and $c_y$ the principal point coordinates, and u,v are the coordinates of the selected first location.

And (ii) for the selected second location determining a second unit vector $d_2$ 311 which points from the second camera 305 to the subject 309 by converting the 2D coordinates of the selected second location in the second image to a 3D direction according to the same equation (6).

Then an estimate of the physical location 308 of the subject 309 within the predefined coordinate system 301 is determined by triangulation.

In one embodiment the triangulation may be done by finding the point within the predefined coordinate system 301 where the line defined by the first unit vector $d_1$ 310 (and the position of the first camera where said line originates) and the line defined by the second unit vector $d_2$ 311 (and the position of the second camera where said line originates) intersect; the point where the line defined by the first unit vector $d_1$ 310 and the line defined by the second unit vector $d_2$ 311 intersect defines the estimate of the physical location 308 of the subject 309 within the predefined coordinate system 301.

However, in practice the two lines defined by the first unit vector $d_1$ 310 and the second unit vector $d_2$ 311, respectively, may not be coplanar and/or not non-parallel, two conditions which are necessary for the lines to intersect. Therefore, in the present invention any suitable method for finding a solution to the triangulation problem may be applied. In the most preferred embodiment of the present disclosure the triangulation is done by finding a point ((i.e. finding the location of the point) within the predefined coordinate system 301 that is the least distance (minimum distance) from both the line defined by the first unit vector $d_1$ 310 and the line defined by the second unit vector $d_2$ 311. The point that is the least distance (minimum distance) from both the line defined by the first unit vector $d_1$ 310 and the line defined by the second unit vector $d_2$ 311 defines the estimate of the physical location 308 of the subject 309 within the predefined coordinate system 301. The midpoint method is one example of a method which can be used to determine the point within the predefined coordinate system 301 that is the least distance from the first unit vector $d_1$ 310 and second unit vector $d_2$ 311, as described in the following equation (7):

$$\begin{bmatrix} \hat{p}_{obj} = \arg\min_{p_{obj}} d(L_1, p_{obj})^2 + d(L_2, p_{obj})^2 \\ \text{where } d(L_i, p_{obj}) = \frac{\|(p_{obj} - p_{c_i}) \times d_i\|}{\|d_i\|} \end{bmatrix} \tag{7}$$

wherein $p_{obj}$ is the physical location of the object (and $\hat{p}_{obj}$ is the estimate thereof), $L_i$ is a line defined by a unit vector $d_i$ where $i \in \{1,2\}$ (for both unit vectors), and $p_{c_i}$ is the position of the i-th camera.

It should be understood that the step of, selecting a first location within pixels which depict the subject 309 in the first image may involve selecting any suitable location within the pixels which depict the subject 309 in the first image; likewise, the step of selecting a second location within the pixels which depict the subject 309 in the second image may involve selecting any suitable location within the pixels which depict the subject 309 in the second image.

In an embodiment the step of selecting a first location within the pixels which depict the subject in the first image comprises selecting a first position which is located at a part of the first image where there is a depiction of a part of the subject 309 which appears the same from a plurality of different viewing perspectives; and the step of selecting a second position within the pixels which depict the subject 309 in the second image comprises, selecting a second position which is located at a part of the second image where there is a depiction of said same part of the subject 309. More preferably, the step of selecting a first location within the pixels which depict the subject in the first image comprises selecting a first position which is located at a part of the first image where there is a depiction of a part of the subject 309 which appears the same from every viewing perspectives; and the step of selecting a second position within the pixels which depict the subject 309 in the second image comprises, selecting a second position which is located at a part of the second image where there is a depiction of said same part of the subject 309.

In an embodiment the step of selecting a first location within the pixels which depict the subject 309 in the first image comprises, selecting a first location which is at a predefined location within pixels which depict the subject 309 in the first image; and the step of selecting a second location within the pixels which depict the subject 309 in the second image comprises, selecting a second location which is at the same predefined location among the pixels which depict the subject 309 in the second image. The predefined location may comprise any of, a predefined end extremity of the pixels which depict the subject 309, a top of the pixels which depict the subject 309, a bottom of the pixels which depict the subject 309, and/or the middle of the pixels which depict the subject 309; the centroid of the pixels which depict the subject 309. Preferably, the step of selecting a first location within the pixels which depict the subject 309 in the first image comprises, selecting a first location which is at an end extremity of the pixels which depict the subject 309 in the first image or selecting a first location which is at the centroid of the pixels which depict the subject 309 in the first image; and the step of selecting a second location within the pixels which depict the subject 309 in the second image comprises, selecting a second location which is at the end extremity of the pixels which depict the subject 309 in the second image or selecting a second location which is at the centroid of the pixels which depict the subject 309 in the second image.

In one preferred embodiment the step of triangulation of a first location within the pixels which depict the subject in the first image and a location within the pixels which define the subject in the second image may comprise, triangulation of the pixel coordinates of the subject from each of the first and second images. In such an embodiment the step of selecting a first location within the pixels which depict the subject 309 in the first image comprises selecting a first pixel which is among the pixels which depict the subject 309 in the first image; and the step of selecting a second location within the pixels which depict the subject 309 in the second image, comprises selecting a second pixel which is among the pixels which depict the subject 309 in the second image. In other words, the selected first location in the first image may correspond to the location of a first pixel that is within the pixels that depict the subject 309 in the first image, and the selected second location in the second image may correspond to the location of a second pixel that is within the pixels that depict the subject 309 in the second image.

Preferably, the step of estimating the physical location of the subject 309 in the predefined coordinate system 301 by triangulation of the pixel coordinates of the subject from each of the first and second images, comprises, selecting a pixel from the pixels which depict the subject 309 in the first image; selecting a pixel from the pixels which depict the subject 309 in the second image; estimating the location of a point in the predefined coordinate system which is the least distance from both a light ray corresponding to the selected pixel from the first image and a light ray corresponding to the selected pixel from the second image, wherein the location of the point corresponds to the estimation of the location of the subject in the predefined coordinate system. In another embodiment the step of estimating the physical location of the subject 309 in the predefined coordinate system 301 by triangulation of the pixel coordinates of the subject from each of the first and second images, comprises, selecting a pixel from the pixels which depict the subject 309 in the first image; selecting a pixel from the pixels which depict the subject 309 in the second image; estimating the location of a point at which a light ray corresponding to the selected pixel from the first image and a light ray corresponding to the selected pixel from the second image intersect, wherein the location of the point corresponds to the estimation of the location of the subject in the predefined coordinate system. Preferably the location of the point is a location of a single point.

In the present disclosure "the light ray/projection line corresponding to the selected pixel in an image" (that selected pixel having a 2D coordinate in the image) is defined as the line described by an origin (3D point) in the camera (preferably the camera center) and a direction vector corresponding to the selected pixel in the image, where the direction vector is defined as follows: any light that is received from the camera from said direction will arrive at the image sensor on said corresponding pixel in the image.

Preferably the step of estimating the location of the point in the predefined coordinate system which is the least distance from both a light ray corresponding to the selected pixel from the first image and a light ray corresponding to the selected pixel from the second image, comprise carrying out a midpoint method or modified Euler method.

In an embodiment the step of estimating the location of the point in the predefined coordinate system which is the least distance from both the light ray corresponding to the selected pixel from the first image and the light ray corresponding to the selected pixel from the second image, comprises, determining two dimensional image coordinates of the selected pixel in the first image; converting the determined two dimensional image coordinates into a first three dimensional vector which represents the light ray corresponding to the selected pixel in the first image; determining two dimensional image coordinates of the selected pixel in the second image; converting the determined two dimensional image coordinates into a second three dimensional vector which represents the light ray corresponding to the selected pixel in the second image; using the predefined position and orientation of the camera within the predefined coordinate system to determine the location of the point in the predefined coordinate system which is the least distance from both the first three dimensional vector and second three dimensional vector, wherein the location of the point corresponds to the location of the point which is the least distance from both the light ray corresponding to the selected pixel from the first image and the light ray corresponding to the selected pixel from the second image.

In the example illustrated in Figure 3, step (f2) comprises the steps of, selecting a first location within the pixels which depict the subject 309 in the first image, and selecting a second location within the pixels which depict the subject 309 in the second image; then triangulation of the selected first location and selected second location is carried out to estimate the physical location of the subject 309.

The estimated physical location of the subject 309 within the predefined coordinate system 301 may be used to adjust the travel path of a mobile robot (e.g. to adjust a flight path of an autonomous aerial vehicle) to avoid the estimated physical location of the subject 309. Accordingly, the method may further comprise the step of adjusting the trajectory (preferably adjusting the predefined trajectory) for a mobile robot so that the mobile robot avoids the estimated physical location of the subject. The mobile robot may be an autonomous robot. Preferably the mobile robot is an autonomous aerial vehicle. Most preferably the mobile robot is an autonomous aerial vehicle which is part of an inventory management system, wherein the autonomous aerial vehicle is configured to fly along a trajectory (preferably a predefined trajectory) within a warehouse to monitor the level of inventory within the warehouse. If, for example, that trajectory (preferably a predefined trajectory) requires the autonomous aerial vehicle to fly through a location corresponding to the estimated physical location 308 of the subject 309, then there is a risk that the autonomous aerial vehicle may collide with the subject 309. Accordingly, the method may further comprise a step of adjusting the trajectory (preferably adjusting the predefined trajectory) so that the autonomous aerial vehicle avoids the location corresponding to the estimated physical location of the subject, and thereby avoids a risk of colliding with the subject. For example, the trajectory (preferably a predefined trajectory) is changed to so that it does not contain a location corresponding to the estimated physical location of the subject. Thus, the adjustment of the trajectory (preferably adjustment of the predefined trajectory) may be done to ensure that the mobile robot does not collide with the subject when following the trajectory. Additionally, or alternatively, the adjustment of the trajectory (preferably adjustment of the predefined trajectory) may be done to optimize the trajectory. For example, the trajectory (preferably the predefined trajectory) may be optimized to reduce the time and/distance for the mobile robot to get from a first predefined location to a second predefined location.

In an embodiment the method further comprises the step of adjusting the trajectory (preferably adjusting the predefined trajectory) for a mobile robot based on a predefined descriptor of the subject 309, wherein the predefined descriptor provides details of the size and/or shape of the subject 309, to ensure that the mobile robot does not collide with the subject 309. The trajectory (preferably the predefined trajectory) may comprise a series of positions in the predefined coordinate frame for the mobile robot to move to, and one or more velocities at which the mobile robot should move. Any of the above-mentioned steps of adjusting the trajectory (preferably adjusting the predefined trajectory) may comprise changing, and/or removing, and/or replacing, one or more of the positions, and/or changing, and/or removing, and/or replacing one or more of the velocities. The adjustment preferably comprises changing, and/or removing, and/or replacing, one or more of the positions; in particular changing, and/or removing, and/or replacing, the position corresponding to the estimated physical location of the subject.

According to a further aspect of the present invention there is provided a method for tracking the position of a subject 309, comprising, carrying out any embodiment of the above-mentioned method (steps (a2)-(f2)) for estimating a physical location of the subject 309, at a first time to determine a first estimation of the physical location of the subject a first time instant; and carrying out any embodiment of the above-mentioned method (steps (a2)-(f2)) for estimating a physical location of the subject 309, at at least a second time to determine a second estimation of the physical location of the subject at at least a second time instant. Accordingly, estimations of the physical locations of the subject 309 at at least two time instances are determined, thereby tracking the position of the subject 309 over time.

In a preferred embodiment the method for tracking the position of a subject 309, comprises, carrying out any embodiment of the above-mentioned method (steps (a2)-(f2)) for estimating a physical location of the subject 309 a plurality of times to provide a respective plurality of estimates of the physical locations of the subject 309 at respective plurality of time instants.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A method, for calibrating a camera which is in a position and orientation within a predefined coordinate system, the method comprising the steps of,

   moving an object along a trajectory within the predefined coordinate system and within a field of view of the camera;
   determining the physical location of the object, over time, within the predefined coordinate system;
   capturing one or more images of the object using the camera as the object is moving along the trajectory; and recording the time instant at which each of the respective one or more images are captured;
   processing each of the one or more images to determine the location of the object in the each of the one or more images, to provide a respective image location for the respective image;
   for each of the one or more images, determining a respective expected image location of the object in that image, wherein the expected image location is determined using an initial predefined estimate of camera parameters and the physical location of the object in the predefined coordinate system at the time instant corresponding to the time instant said respective image was captured;
   optimizing estimates of camera parameters of the camera and/or optimizing an estimate of the position of the camera and/or optimizing an estimate of the orientation of the camera, by minimizing reprojection errors for each of said one or more images, wherein the reprojection error of a respective image is the difference between the expected image location of the object for that image and the image location of the object in said image.

2. A method according to claim 1 wherein the object is a mobile robot and the step of moving an object within the predefined coordinate system and within a field of view of the camera comprises,
   operating the mobile robot to move along a trajectory within the predefined coordinate system and within a field of view of the camera.

3. A method according to claim 1 or 2 wherein the camera has predefined position and orientation within the predefined coordinate system; and

wherein the step of determining a respective expected image location of the object in an image comprises using the initial predefined estimate of camera parameters, and the predefined position and orientation of the camera, to transform the physical location of the object in the predefined coordinate system at the time said image was captured, to a position in a coordinate system of the camera, wherein the position in the coordinate system of the camera defines the expected image location of the object in the image.

4. A method according to claim 1 or 2 further comprising a step of

estimating the position and orientation of the camera within the predefined coordinate system to provide an estimated position and orientation of the camera; and

wherein the step of determining a respective expected image location of the object in an image comprises using the initial predefined estimate of camera parameters, and the estimated position and orientation of the camera, to transform the physical location of the object in the predefined coordinate system at the time said image was captured, to a position in a coordinate system of the camera, wherein the position in the coordinate system of the camera defines the expected image location of the object in the image.

5. A method according to any one of claims 1 - 4 wherein the step of optimizing estimates of camera parameters of the camera by minimizing reprojection errors for each of said one or more images comprises, adjusting the camera parameters of the camera and/or adjusting the position of the camera within the predefined coordinate system and/or adjusting the orientation of the camera, to decrease the difference between the expected image location of the object and the image location of the object.

6. A method according to any one of the preceding claims wherein the step of determining a respective expected image location of the object in that image comprises, computing an expected location of the object expressed in a coordinate system attached to the camera according to the equation:

$$_c\hat{p}_1 = R_{WC}^{\mathsf{T}} \left( _w p_1 - {}_w p_c \right)$$

wherein $R_{WC}$ is a rotation matrix describing a transformation from a coordinate system fixed to the camera to the predefined coordinate system, $_w p_1$ is the physical location of the object expressed in the predefined coordinate frame, $_w p_C$ is the position of the camera in the predefined coordinate frame, and then projecting said computed expected location to image coordinates und v according to a predefined camera projection model **characterized by** said camera parameters.

7. A method according to claim 6 wherein the predefined camera projection model **characterized by** said camera parameters is a pinhole projection model according to the equation:

$$\begin{bmatrix} u \\ v \end{bmatrix} = \begin{bmatrix} f_x & \alpha & c_x \\ 0 & f_y & c_y \end{bmatrix} \begin{bmatrix} _c\hat{p}_{1,x} \\ _c\hat{p}_{1,y} \\ 1 \end{bmatrix} \frac{1}{_c\hat{p}_{1,z}}$$

wherein $R_{WC}$ is a rotation matrix describing the orientation of the camera, $f_x$ and $f_y$ are the focal lengths in x and y-direction of the image sensor, respectively, $c_x$ and $c_y$ are the principal point coordinates (i.e. the x and y coordinate of the image center, and $\alpha$ an image sensor skewness parameter, $_c\hat{p}_{1,x}$, $_c\hat{p}_{1,y}$, $_c\hat{p}_{1,z}$ are the x, y, and z components of the expected position of the object $_c\hat{p}_1$, respectively, $_w\hat{p}_1$ is the position of the object expressed in the predefined coordinate system, and $_w p_c$ is the position of the camera expressed in the predefined coordinate system.

8. A method according to any one of the preceding claims wherein the trajectory comprises one or more positions in the predefined coordinate system for the object to move to, and one or more velocities at which the object should move; and

wherein the step of determining the physical location of the object, over time, comprises, using a first clock, and a known start time at which the object begins the trajectory, and the trajectory, to determine the physical location of the object in the predefined coordinate system at any time instant during the time period that the object is moving along the trajectory.

9.  A method according to any one of the preceding claims wherein the step of determining the physical location of the object, over time, comprises, using a first clock and a position determining means to determine the physical location of the object at any time instant.

10.  A method according to claim 9 wherein a second clock is used to record the time at which each image is captured by the camera.

11.  A method according to claim 10 wherein a first clock and second clock are clock are synchronized to have the same time, or, to have a fixed known time difference.

12.  A method according to claim 11 wherein the method further comprises the step of slowing the velocity at which the object moves along the trajectory if there is a difference between the time on the first clock and the time on the second clock.

13.  A method according to any one of claims 10-12 wherein the first clock and second clock are different clocks, or, wherein the first clock and second clock are the same clock so that only one single clock is used.

14.  A method according to any one of the preceding claims wherein the camera parameters comprise intrinsic camera parameters.

15.  A method according to any one of the preceding claims wherein the camera parameters comprise one or more of: camera intrinsics, and/or a timing offset between a second clock which is used to record the time at which an image is captured by the camera and a first clock which is used to record the time at which the object occupies a physical location.

16.  A method according to any one of the preceding claims wherein the object is an autonomous aerial vehicle.

17.  A method according claim 16 wherein the object is an autonomous aerial vehicle which is part of an inventory management system, wherein the autonomous aerial vehicle is configured to monitor the level of inventory within a predefined space.

18.  A method according to any one of the preceding claims wherein the trajectory is defined by a trajectory which the object follows when carrying out a predefined task.

19.  A method according to claim 18 wherein the predefined task comprises at least one of, carrying out inventory management, and/or carrying out one or more tasks related to an inspection, and/or carrying out an inspection of a subject; and/or moving items and/or delivering items.

20.  A method according to any one of the preceding claims wherein the predefined coordinate system is a three dimensional coordinate system having an x,y and z axes.

21.  A method for determining a physical location of a subject located within a predefined coordinate system, using a camera which is in predefined position and orientation within the predefined coordinate system and which has been calibrated using a method according to claim 1, the method comprising the steps of,

    operating the camera to capture at least one image of the subject; processing the at least one image using image segmentation to detect pixels which depict the subject in the at least one image;
    selecting a location within the pixels which depict the subject; determining the physical location of the subject within the predefined coordinate system by determining where a light ray corresponding to the selected location intersects a predefined plane of the predefined coordinate system on which the subject is located, wherein the location where the light ray intersects the predefined plane corresponds to the physical location of the subject within the predefined coordinate system.

22. A method according to claim 21 wherein the predefined coordinate system is a three-dimensional coordinate system having an x, y and z axis which are each perpendicular to one another, and wherein the predefined plane of the predefined coordinate system on which the subject is located is the x-y plane of the coordinate system, and wherein the subject is located at a zero coordinate on the z-axis.

23. A method according to claim 21 or 22 wherein the x-y plane of the coordinate system is located at a surface of the ground and a zero coordinate on the z-axis corresponds is at a surface of the ground, so that the step of determining where the light ray corresponding to the selected location intersects a predefined plane of the predefined coordinate system on which the subject is located, comprises determining where the light ray corresponding to the selected location intersects the ground.

24. A method according to any one of claims 21-23 wherein the step of determining where the light ray corresponding to the selected location intersects the predefined plane of the predefined coordinate system on which the subject is located, comprises

   determining two dimensional image coordinates of the selected location in the image;
   converting the determined two dimensional image coordinates into a three dimensional vector which represents the light ray corresponding to the selected location;
   using the predefined position and orientation of the camera within the predefined coordinate system to determine wherein the three dimensional vector intersects the predefined plane of the predefined coordinate system;
   wherein the location where the three dimensional vector intersects the predefined plane of the predefined coordinate system corresponds to the location where the light ray corresponding to the selected location intersects the predefined plane of the predefined coordinate system, and corresponds to the physical location of the subject within the predefined coordinate system.

25. A method according to any one of claims 21-24 wherein the step of determining where light ray corresponding to the selected location intersects the predefined plane of the predefined coordinate system on which the subject is located, comprises,

   determining a unit vector $_c d$ which points from the camera to the subject by converting the 2D coordinates of the selected location in the image to a 3D direction according to the following equation:

$$\text{solve} \begin{cases} \frac{u-c_x}{f_x} = \frac{x}{z} \\ \frac{v-c_y}{f_y} = \frac{y}{z} \\ z = \sqrt{1 - x^2 - y^2} \end{cases} \text{for } _C d = \begin{bmatrix} x \\ y \\ z \end{bmatrix}$$

   wherein $f_x$, $f_y$ are focal length parameters, and $c_x$ and $c_y$ the principal point coordinates, and u,v are the coordinates of the selected location; and
   determining where the light ray corresponding to the selected location intersects the predefined plane of the predefined coordinate system on which the subject is located/rests, by solving the following equation for $x$, $y$ and $\lambda$ :

$$_w p_c + R_{WC} \cdot _C d \cdot \lambda = \begin{bmatrix} x \\ y \\ z_p \end{bmatrix}$$

   wherein x and y are the two first coordinates of the physical location of the subject within the predefined coordinate system, and $z_p$ is the known altitude of plane in the predefined coordinate system, $R_{WC}$ is a rotation matrix describing the orientation of the camera. More specifically, the rotation matrix describes a transformation from a coordinate system fixed to the camera to the predefined coordinate system. Further, $_w p_C$ is the position of the camera expressed in the predefined coordinate system.

26. A method according to any one of claims 21-25 wherein the step of selecting a location within the pixels which depict the subject comprises selecting a location which is located at an end extremity of the pixels which depict the subject.

27. A method according to any one of claims 21-26 wherein the step of selecting a location within the pixels which depict the subject comprises selecting a location which is located at the centroid of the pixels which depict the subject.

28. A method according to any one of claims 21-27 wherein the step of selecting a location within the pixels which depict the subject comprises selecting a location which is below or at the lowest pixel, or, selecting a location which is closest to a surface depicted in the image on top of which the subject rests.

29. A method according to any one of claims 21-28 wherein the step of selecting a location within the pixels which depict the subject comprises selecting a location that corresponds to the location of a pixel, wherein said pixel is one the pixels which depict the subject.

30. A method for tracking the position of a subject, comprising,

carrying out the steps of any one of claims 21-29 a first time to determine a first physical location of the subject at a first time instant;
carrying the steps of any one of claims 21-29 at least a second time to determine a second physical location of the subject at a second time instant.

31. A method for tracking the position of a subject according to claim 29, comprising, carrying out the steps of any one of claims 21-29 a plurality of times to determine a respective plurality of physical locations of the subject at respective plurality of time instants.

32. A method for estimating a physical location of a subject located within a predefined coordinate system, using a first camera which is in a predefined position and orientation within the predefined coordinate system and which has been calibrated using a method according to claim 1, and a second camera which is in a predefined position and orientation within the predefined coordinate system and which has been calibrated using a method according to claim 1, the method comprising the steps of,

operating the first camera to capture a first image;
operating the second camera to capture a second image, wherein the field of view of the first camera and the field of view of the second camera, at least partially overlap ;
processing the first image using image segmentation to detect at least one subject in the first image;
processing the second image using image segmentation to detect at least one subject in the second image;
determining if the subject detected in the first image is the same as the subject detected in the second image by comparing one or more characteristics of the subject detected in the first image with one or more characteristics of the subject detected in the second image;
if the subject detected in the first image is the same as the subject detected in the second image, then estimating the physical location of the subject in the predefined coordinate system by triangulation of a first location within pixels which depict the subject in the first image and a second location within pixels which depict the subject in the second image.

33. A method according to claim 32 wherein the step of estimating the physical location of the subject in the predefined coordinate system by triangulation of the pixel coordinates of the subject from each of the first and second images, comprises,

selecting a first location within the pixels which depict the subject in the first image;
selecting a second location with the pixels which depict the subject in the second image ;
estimating the location of a point in the predefined coordinate system which is the least distance from both a light ray corresponding to the selected first location in the first image and a light ray corresponding to the selected second location in the second image, wherein the location of the point corresponds to the estimation of the location of the subject in the predefined coordinate system.

34. A method according to claim 32 or 33 wherein the step of estimating the location of the point in the predefined coordinate system which is the least distance from both the light ray corresponding to the selected first location in the first image and the light ray corresponding to the selected second location in the second image, comprises,

determining two dimensional image coordinates of the selected first location in the first image;
converting the determined two dimensional image coordinates into a first three dimensional vector which represents the light ray corresponding to the selected first location in the first image;
determining two dimensional image coordinates of the selected second location in the second image;
converting the determined two dimensional image coordinates into a second three dimensional vector which represents the light ray corresponding to the selected second location in the second image;
using the predefined position and orientation of the camera within the predefined coordinate system to determine the location of the point in the predefined coordinate system which is the least distance from both the first three dimensional vector and second three dimensional vector, wherein the location of the point corresponds to the location of the point which is the least distance from both the light ray corresponding to the selected first location in the first image and the light ray corresponding to the selected second location in the second image.

35. A method according to any one of claims 32-34 wherein the step of determining the location of the point in the predefined coordinate system which is the least distance from both the light ray corresponding to the selected first location in the first image and the light ray corresponding to the selected second location in the second image, comprises,

for the selected first pixel determining a first unit vector $d_1$ which points from the first camera to the subject by converting the 2D coordinates of the selected first pixel in the first image to a 3D direction according to the following equation:

$$\text{solve} \begin{cases} \frac{u-c_x}{f_x} = \frac{x}{z} \\ \frac{v-c_y}{f_y} = \frac{y}{z} \\ z = \sqrt{1-x^2-y^2} \end{cases} \text{for } _Cd = \begin{bmatrix} x \\ y \\ z \end{bmatrix}$$

wherein $f_x$, $f_y$ are focal length parameters, and $c_x$ and $c_y$ the principal point coordinates, and u,v are the coordinates of the selected first pixel; and
for the selected second pixel determining a second unit vector $d_2$ 311 which points from the second camera to the subject by converting the 2D coordinates of the selected second pixel in the second image to a 3D direction according to the following equation:

$$\text{solve} \begin{cases} \frac{u-c_x}{f_x} = \frac{x}{z} \\ \frac{v-c_y}{f_y} = \frac{y}{z} \\ z = \sqrt{1-x^2-y^2} \end{cases} \text{for } _Cd = \begin{bmatrix} x \\ y \\ z \end{bmatrix}$$

wherein $f_x$, $f_y$ are focal length parameters, and $c_x$ and $c_y$ the principal point coordinates, and u,v are the coordinates of the selected second pixel; and
determining a point within the predefined coordinate system that is the least distance from both the first unit vector $d_1$ and second unit vector $d_2$, wherein the location of the point within the defines the estimate of the physical location of the subject within the predefined coordinate system.

36. A method according to claim 35 wherein the step of determining a point within the predefined coordinate system that is the least distance from both the first unit vector $d_1$ and second unit vector $d_2$ comprises solving the following equation:

$$\begin{bmatrix} \hat{p}_{obj} = \arg\min_{p_{obj}} d(L_1, p_{obj})^2 + d(L_2, p_{obj})^2 \\ \text{where } d(L_i, p_{obj}) = \frac{\|(p_{obj}-p_{c_i}) \times d_i\|}{\|d_i\|} \end{bmatrix}$$

wherein $p_{obj}$ is the physical location of the object (and $\hat{p}_{obj}$ is the estimate thereof), $L_i$ is a line defined by a unit vector $d_i$ where $i \in \{1,2\}$ (for both unit vectors), and $p_{c_i}$ is the position of the $i$-th camera.

37. A method according to any one of claims 32-36 wherein the step of selecting a first location within the pixels which depict the subject in the first image comprises selecting a first position which is located at a part of the first image where there is a depiction of a part of the subject which appears the same from a plurality of different viewing perspectives; and the step of selecting a second position within the pixels which depict the subject in the second image comprises, selecting a second position which is located at a part of the second image where there is a depiction of said same part of the subject.

38. A method according to claim 37 wherein the step of selecting a first location within the pixels which depict the subject in the first image comprises, selecting a first location which is at a predefined location within pixels which depict the subject in the first image; and the step of selecting a second location within the pixels which depict the subject in the second image comprises, selecting a second location which is at the same predefined location among the pixels which depict the subject in the second image.

39. A method according to claim 38 wherein the predefined location comprises any of, a predefined end extremity of the pixels which depict the subject, a top of the pixels which depict the subject, a bottom of the pixels which depict the subject, and/or the middle of the pixels which depict the subject; the centroid of the pixels which depict the subject.

40. A method according to any one of claims 37-39 wherein the step of selecting a first location within the pixels which depict the subject in the first image comprises, selecting a first location which is at an end extremity of the pixels which depict the subject in the first image; and the step of selecting a second location within the pixels which depict the subject in the second image comprises, selecting a second location which is at the end extremity of the pixels which depict the subject in the second image.

41. A method according to any one of claims 32-40 wherein the time between operating the first camera to capture the first image and the operating of the second camera to capture the second image is less than 1 second.

42. A method according to any one of claims 32-41 wherein said characteristics that are compared comprise one or more of: descriptors describing the subject, color of the subject, size of the subject, shape of the subject, and/or a segmentation label.

43. A method according to any one of claims 32-42 wherein the selected first location within the pixels which depict the subject in the first image corresponds to the location of a first pixel, and the selected second location within the pixels which depict the subject in the second image corresponds to the location of a second pixel; and wherein the step of triangulation of a location within the pixels which depict the subject in the first image and a location within the pixels which depict the subject in the second image may comprise, triangulation of the pixel coordinates of the first pixel and second pixel.

44. A method according to any one of claims 32-43 wherein the detected at least one subject in the first image has associated with it a descriptor describing said subject; and

   wherein the detected at least one subject in the second image has associated with it a descriptor describing said subject; and
   wherein the method comprises the step of comparing the descriptors to determine if the subject detected in the first image is the same as the subject detected in the second image.

45. A method according to any one of claims 32-44 wherein the method further comprises the step of adjusting a trajectory for a object so that the object avoids the estimated physical location of the subject.

46. A method according to any one of claims 32-45 wherein the method further comprises the step of adjusting a trajectory for a object based on a predefined descriptor of the subject, wherein the predefined descriptor provides details of the size and/or shape of the subject, to ensure that the object does not collide with the subject.

47. A method for tracking the position of a subject, comprising,

   carrying out the steps of any one of claims 32-46 a first time to estimate a first physical location, in predefined coordinate system, of the subject, at a first time instant;
   carrying out the steps of any one of claims 32-46 at least a second time to estimate a second physical location, in predefined coordinate system, of the subject, at a second time instant.

48. A method for tracking the position of a subject, comprising,
carrying out the steps of any one of claims 32-46 a plurality of times to estimate a respective plurality of physical locations in predefined coordinate system, of the subject, at respective plurality of time instants.

Fig.1

Fig.2

Fig.3

## EUROPEAN SEARCH REPORT

**Application Number**

EP 25 16 6982

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 106287 A (CANON KK) 8 June 2015 (2015-06-08) | 1,3-11, 13-15 | INV. G06T7/80 |
| A | * Fig. 9 and 13,19,29-33,39,45-48,56-58,72-77. * | 12 | |
| X | CN 114 049 401 A (SUZHOU DIGITAL HEALTH CARE MEDICAL TECH CO LTD) 15 February 2022 (2022-02-15) | 1,5-11, 13-15 | |
| A | *   64,67-69,72,83,103,124-126 * | 12 | |
| X | US 2023/070281 A1 (MELROSE JESSE [US] ET AL) 9 March 2023 (2023-03-09) | 1,2, 5-11, 13-15 | |
| A | * Fig. 7 and   5,19,92,109-111,114. * | 12 | |
| A | CN 115 713 563 A (HANGZHOU HIKVISION DIGITAL TEC) 24 February 2023 (2023-02-24) *   73 * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 14 November 2025 | Nicolau, Stephane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

Europäisches
Patentamt

European
Patent Office

Office européen
des brevets

**Application Number**

**EP 25 16 6982**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

[X] No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

## ANNEX TO THE EUROPEAN SEARCH REPORT
## ON EUROPEAN PATENT APPLICATION NO.

EP 25 16 6982

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2025

| Patent document cited in search report | | Publication date | Patent family member(s) | | Publication date |
|---|---|---|---|---|---|
| JP 2015106287 | A | 08-06-2015 | JP | 6282098 B2 | 21-02-2018 |
| | | | JP | 2015106287 A | 08-06-2015 |
| CN 114049401 | A | 15-02-2022 | NONE | | |
| US 2023070281 | A1 | 09-03-2023 | AU | 2022337968 A1 | 07-03-2024 |
| | | | CA | 3230374 A1 | 09-03-2023 |
| | | | CN | 118119972 A | 31-05-2024 |
| | | | EP | 4396779 A1 | 10-07-2024 |
| | | | JP | 2024536925 A | 08-10-2024 |
| | | | KR | 20240056516 A | 30-04-2024 |
| | | | US | 2023070281 A1 | 09-03-2023 |
| | | | US | 2025162158 A1 | 22-05-2025 |
| | | | WO | 2023034150 A1 | 09-03-2023 |
| CN 115713563 | A | 24-02-2023 | NONE | | |

EPO FORM P0459

For more details about this annex : see Official Journal of the European Patent Office, No. 12/82